# EUROPEAN PATENT APPLICATION

(11) **EP 4 481 969 A1**
(43) Date of publication of application: **25.12.2024**
(21) Application number: 24170665.4
(22) Date of filing: 16.04.2024
(51) Int. Cl.: H02H 3/02, H02H 7/122, H02M 1/32, H02H 9/02

(54) **ISOLATED GATE DRIVER WITH A FAULT SIGNAL**

(30) Priority: 23.06.2023 US 202318340053
(71) Applicant: Allegro MicroSystems, LLC, Manchester, NH 03103-3353 (US)
(72) Inventor: Salato, Maurizio, Bedford 01730 (US); Mangtani, Vijay, Nashua 03062 (US); Taylor, William P., Amherst 03031 (US)
(74) Representative: South, Nicholas Geoffrey

(57) **Abstract**

A system, comprising: a power switch; a controller; a transformer having a primary winding and a secondary winding; a first control interface that is coupled between the controller and the primary winding, the first control interface being arranged to: (i) detect an electrical current through the primary winding and (ii) output a fault signal to the controller in response to detecting that the electrical current through the primary winding has crossed a threshold; and a second control interface that is coupled between the secondary winding and the power switch, the second control interface being configured to: (i) provide an electrical current received from the transformer to the power switch, (ii) detect whether an error is present in the operational conditions of the power switch, and (iii) in response to detecting the error, change a level of an electrical current through the secondary winding.

## Description

### BACKGROUND

An electronic system may include a first control interface and a second control interface that are coupled to each other via a magnetic coupling device, such as a transformer. The magnetic coupling structure may be used to transfer power for powering a load that is controlled jointly by the first control interface and the second control interface. The load may include an electric motor and/or any other suitable type of electric load. The first control interface and the second control interface may control various aspects of the operation of the load and be in communication with each other.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

According to aspects of the disclosure, a system is provided, comprising: a power switch; a controller; a transformer having a primary winding and a secondary winding; a first control interface that is coupled between the controller and the primary winding, the first control interface being arranged to: (i) detect an electrical current through the primary winding and (ii) output a fault signal to the controller in response to detecting that the electrical current through the primary winding has crossed a threshold; and a second control interface that is coupled between the secondary winding and the power switch, the second control interface being configured to: (i) provide an electrical current received from the transformer to the power switch, (ii) detect whether an error is present in the operational conditions of the power switch, and (iii) in response to detecting the error, change a level of an electrical current through the secondary winding so as to cause the electrical current through the primary winding to cross the threshold.

According to aspects of the disclosure, a system is provided, comprising: a transformer having a primary winding and a secondary winding; a first control interface that is coupled to the primary winding of the transformer, the first control interface being arranged to: (i) detect an electrical current through the primary winding and (ii) take a remedial action in response to the electrical current through the primary winding crossing a threshold; and a second control interface that is coupled to the secondary winding of the transformer, the second control interface being configured to: (i) detect whether an error is present in at least one of the second control interface and a device that is powered using the transformer, and (ii) in response to detecting the error, change a level of the electrical current through the secondary winding so as to cause the electrical current through the primary winding to cross the threshold.

According to aspects of the disclosure, a system is provided, comprising: a magnetically coupled structure including a first element that is magnetically coupled to a second element; a first control interface that is coupled to the first element, the first control interface being arranged to: (i) detect an electrical current draw of the magnetically coupled structure and (ii) take a remedial action in response to the electrical current draw crossing a threshold; and a second control interface that is coupled to the second element, the second control interface being configured to: (i) detect whether an error is present in at least one of the second control interface and a device that is powered using the magnetically coupled structure, and (ii) in response to detecting the error, cause the electrical current draw of the magnetically coupled structure to cross the threshold.

According to aspects of the disclosure, a system is provided, comprising: a power switch; a controller; a magnetically coupled structure having a first element and a second element; a first control interface that is coupled between the controller and the first element, the first control interface being arranged to: (i) measure an electrical current through the first element, (ii) detect whether the measured electrical current falls into any given one of a plurality of predetermined threshold ranges that are outside of a normal operating range of the magnetically coupled structure, (iii) when the detected electrical current falls into any given one of the plurality of threshold ranges, identify an error type that corresponds to the given threshold range, and (iv) output a fault signal that is indicative of the error type; and a second control interface that is coupled between the second element and the power switch, the second control interface being configured to: (i) provide an electrical current received from the magnetically coupled structure to the power switch, (ii) detect whether an error is present, and (iii) when an error is present, change a level of an electrical current through the second element so as to cause the electrical current through the first element to fall into a threshold range that corresponds to a respective type of the error.

### BRIEF DESCRIPTION OF THE DRAWING FIGURES

Other aspects, features, and advantages of the claimed invention will become more fully apparent from the following detailed description, the appended claims, and the accompanying drawings in which like reference numerals identify similar or identical elements. Reference numerals that are introduced in the specification in association with a drawing figure may be repeated in one or more subsequent figures without additional description in the specification in order to provide context for other features.
FIG. 1A is a diagram of an example of a system, according to aspects of the disclosure;
FIG. 1B is a diagram of an example of a control interface, according to aspects of the disclosure;
FIG. 2 shows a graph illustrating aspects of the operation of the system of FIG. 1A;
FIG. 3A is a flowchart of an example of a process, according to aspects of the disclosure;
FIG. 3B is a flowchart of an example of a process, according to aspects of the disclosure;
FIG. 3C is a flowchart of an example of a process, according to aspects of the disclosure;
FIG. 4 is a diagram of an example of a system, according to aspects of the disclosure;
FIG. 5A is a flowchart of an example of a process, according to aspects of the disclosure;
FIG. 5B is a flowchart of an example of a process, according to aspects of the disclosure;
FIG 6A. shows a graph illustrating aspects of the operation of the system of FIG. 1A;
FIG. 7A is a flowchart of an example of a process, according to aspects of the disclosure; and
FIG. 7B is a flowchart of an example of a process, according to aspects of the disclosure.

### DETAILED DESCRIPTION

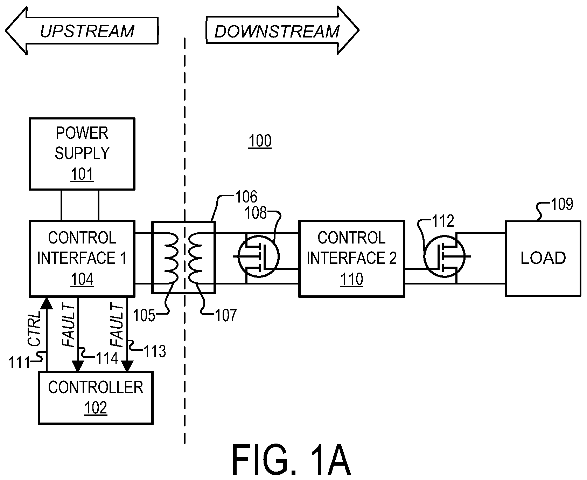

FIG. 1A is a diagram illustrating an example of a system 100, according to the disclosure. System 100 may include a power supply 101, a controller 102, a control interface 104, a transformer 106, a transistor 108, a control interface 110, a transistor 112, and a load 109. In system 100, power is transferred between the power supply 101 and the load 109 through control interfaces 104 and 110, as well as the transformer 106.

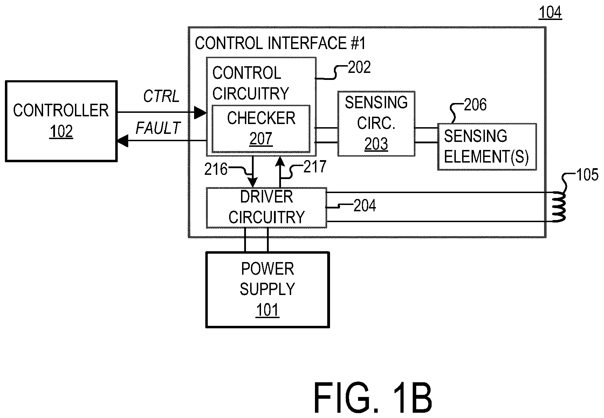

Controller 102 may comprise any suitable type of processing circuitry. For instance, it may include a general-purpose processor, a special-purpose processor, an application-specific integrated circuit (ASIC), or a field-programmable gate array (FPGA), among others. In some implementations, controller 102 may be configured to modulate and/or actuate the load 109, by means, for example, of transistor 112. In some implementations, the modulation may be dictated by external system control needs. Additionally or alternatively, in some implementations, the modulation may be dictated by logic that is executed by the controller 102. Similarly, the control interface 104 and the control interface 110 may each include a general-purpose processor, a special-purpose processor, an application-specific integrated circuit (ASIC), a field-programmable gate array (FPGA), and/or any other suitable type of processing circuitry. As for the transistors, transistor 108 may be a Field Effect Transistor (FET) or any other suitable transistor, and transistor 112 may also be a Field Effect Transistor (FET) or another suitable type of transistor. Load 109 may include one or more of an electric motor a transformer, a magnetic device, a capacitive device, a piezoelectric device, or and/or any other suitable type of electric load. Although in the example of FIG. 1, switch 112 is a FET, the present disclosure is not limited thereto. By way of example, switch 112 could be a Bipolar Junction Transistor, an Insulated Gate Bipolar Transistor, A Junction Field Effect transistor, an optical interface transmitter/receiver or an electromechanical relay.

The transformer 106 comprises a primary winding 105 and a secondary winding 107. The components of system 100 located upstream from the primary winding 105 are referred to as "the upstream side of system 100." In this particular example, the upstream side of system 100 comprises at least the power supply 101, the control interface 104, and the controller 102. On the other hand, the components of system 100 situated downstream from the secondary winding 107 are referred to as "the downstream side of system 100." According to the present example, the downstream side of system 100 comprises at least the control interface 110, the transistor 112, and the load 109. Under the nomenclature of the present disclosure, transistor 108 is not considered part of the downstream side of system 100.

The control interface 104 can be coupled to both the power supply 101 and the primary winding 105 of the transformer 106. The control interface 104 may be powered with power received from power supply 101. Furthermore, in some implementations, some of the power supplied by power supply 101 may be routed to control interface 110 and transistor 112. In such implementations, control interface 110 and transistor 112 may also be powered with power received from power supply 101.

Additionally, the control interface 104 may be further coupled to controller 102. The control interface 104 may receive a control signal 111 from controller 102, which controller 102 can use to control various aspects of the operation of load 109 and/or control interfaces 104 and 110. For example, controller 102 may use the control signal 111 to instruct the control interface 104 to turn on or off the load 109. In the case where load 109 is an electric motor, the control signal 111 may be utilized to specify the speed and/or torque of the motor. It will be understood that the present disclosure is not limited to any specific implementation of the control signal 111.

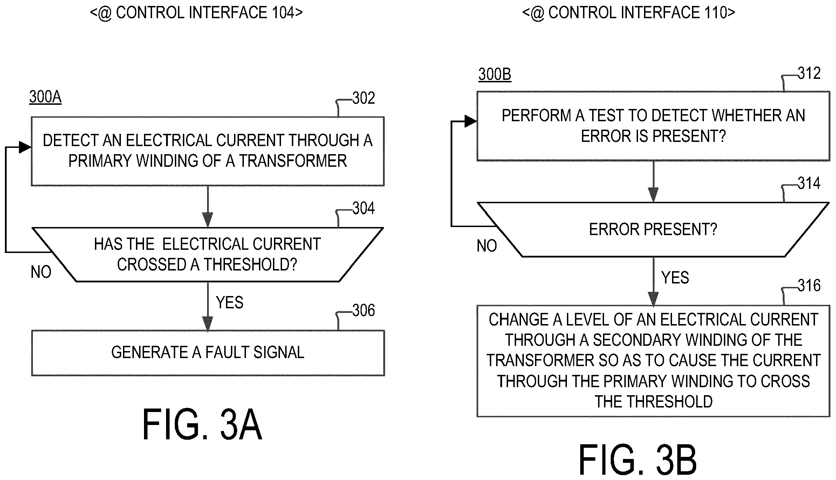

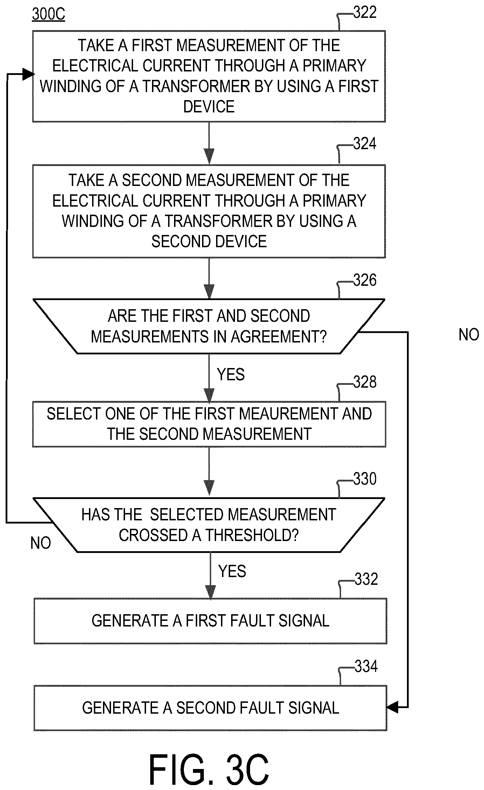

The control interface 104 can also be configured to provide a fault signal 113 to controller 102. Fault signal 113 may indicate the presence of a fault on the downstream side of system 100. The fault can be communicated to the control interface 104 by the control interface 110 via transformer 106, after which the control interface 104 may generate the fault signal 113 to notify controller 102 of the fault. Importantly, the communication of the fault between interfaces 104 and 110 may be embedded in the power transfer from the control interface 104 to load 109. The manner in which this communication is discussed further below with respect to FIGS. 3-4.

The control interface 110 may be coupled to the secondary winding 107 of transformer 106. The control interface 110 may be arranged to deliver power received from the secondary winding 107 to load 109. The control interface 110 may be coupled to the gate of the transistor 108. In some implementations, the control interfaces 104 and 110 may be formed on different respective semiconductor dies. Additionally or alternatively, in some implementations, the control interfaces 104 and 110 may be formed on different semiconductor dies.

Transistor 108 may be coupled in parallel with control interface 110 to the secondary winding 107 of transformer 106. The source of transistor 108 may be coupled to one end of the secondary winding 107, the drain of transistor 108 may be coupled to the other end of the secondary winding 107, and the gate of transistor 108 may be coupled to the control interface 110. Transistor 108 may be configured to provide a bypass path that extends between the ends of the secondary winding 107, effectively bypassing the control interface 110, the transistor 112, and the load 109. The conductance of the bypass path is determined by the control interface 110, which adjusts the voltage applied to the gate of transistor 108.

Transistor 112 may be configured to supply power to load 109. Transistor 112 may operate as a power switch that can be turned on and off based on the direction of the current through the secondary winding 107 and/or the direction of the electrical current on the path between the gate and the source of the transistor 112. The control interface 110 may be configured to control the transistor 112 using any modulation technique, such as pulse-width modulation, for example. In some implementations, the transistor 112 may be part of a switching cell of a switch mode power system for powering the load 109.

Optionally, the control interface 104 may be arranged to provide a fault signal 114 to controller 102. The fault signal 114 may be used to indicate a failure in the electronic circuitry in control interface 104 and/or sub-system that is used to measure the level of electrical current through the primary winding 105 of transformer 106. The provision of fault signal 114 may be useful in applications that require a high level of fault tolerance, such as automotive applications that are required to comply with the Automotive Safety Integrity level-D (ASIL-D) standard.

In some implementations, the fault signal 113 may be output on a respective dedicated fault pin of the control interface 104 (e.g., a pin that is used to output the signal 113 only). Additionally or alternatively, in some implementations, the fault signal 114 may be output on a respective dedicated fault pin of the control interface 104 (e.g., a pin that is used to output the signal 114 only). However, alternative implementations are possible in which signal 113 is output on a pin that is also used by the control interface 104 to provide other feedback or signals (*e.g*., signals other than the fault signals 113 and 114) to the controller 102. Furthermore, alternative implementations are possible in which signal 113 is output on a pin that is also used by the control interface 104 to provide other feedback or signals (e.g., signals other than the fault signals 113 and 114) to the controller 102.

FIG. 1B is a diagram of the control interface 104, in accordance with an implementation in which the control interface 104 includes circuitry for generating the fault signal 114. As illustrated, the control interface 104 may include a control circuitry 202, a driver circuitry 204, a sensing circuitry 203, and magnetic field sensing elements 206.

The magnetic field sensing elements 206 may be configured to measure to measure a magnetic field that is generated by a line that couples the driver circuitry 204 with the winding 105, and which is used to deliver electrical current from the driver circuitry 204 to the winding 105. The sensing circuitry 203 may include any suitable type of processing circuitry that is configured to filter and adjust signals generated by the magnetic field sensing elements 206 to determine the level of electrical current flowing through the primary winding 105 of the transformer 106.

As used herein, the term "magnetic-field sensing element" is used to describe a variety of electronic elements that can sense a magnetic field. The magnetic-field sensing element can be, but is not limited to, a Hall Effect element a magnetoresistance element, a magnetotransistor or an inductive coil. As is known, there are different types of Hall Effect elements, for example, a planar Hall element, a vertical Hall element, and a Circular Vertical Hall (CVH) element. As is also known, there are different types of magnetoresistance elements, for example, a semiconductor magnetoresistance element such as Indium Antimonide (InSb), a giant magnetoresistance (GMR) element, an anisotropic magnetoresistance element (AMR), a tunneling magnetoresistance (TMR) element, and a magnetic tunnel junction (MTJ). The magnetic field sensing element may be a single element or, alternatively, may include two or more magnetic field sensing elements arranged in various configurations, e.g., a half bridge or full (Wheatstone) bridge. Depending on the device type and other application requirements, the magnetic field sensing element may be a device made of a type IV semiconductor material such as Silicon (Si) or Germanium (Ge), or a type III-V semiconductor material like Gallium-Arsenide (GaAs) or an Indium compound, e.g., Indium-Antimonide (InSb).

The driver circuitry 204 may include any suitable type of circuitry for driving the primary winding 105 of transformer 106. The control circuitry 202 may include any suitable type of processing circuitry configured to provide a signal 216 to the driver circuitry 204 and receive a signal 217 from the driver circuitry. Signal 216 may specify any suitable operational characteristic of the driver circuitry 204. For instance, signal 216 may be used to turn the driver circuitry 204 on and off. Signal 217 may indicate the level of electrical current through the primary winding 105, as measured by the driver circuitry 204. In this regard, the driver circuitry 204 may include a voltage-measuring resistor, a GMR, a TMR, an AMR, a receiving coil, and/or any other suitable type of circuitry that is arranged to measure and/or approximate the level of electrical current through the primary winding 105 of transformer 106.

The control circuitry 202 may be configured to implement a checker 207. Checker 207 may be implemented in hardware, in software, or as a combination of hardware and software. Checker 207 may receive a first measurement of the electrical current through the primary winding 105 taken by the magnetic field sensing elements 206 and sensing circuitry 203. Checker 207 may further receive a second measurement of the electrical current through the primary winding 105 reported by the driver circuitry 204. Checker 207 may compare the first measurement to the second measurement to determine if the first measurement is in agreement with the second measurement. In some implementations, the first measurement may be in agreement with the second measurement if the difference between the first measurement and the second measurement is less than 15% of the lower of the first measurement and the second measurement. However, the present disclosure is not limited to any specific method for determining whether the first measurement is in agreement with the second measurement. If the two measurements are not in agreement, the control circuitry 202 may generate the fault signal 114 (shown in FIG. 1A) and provide the control signal to controller 102. As noted above, fault signal 114 may indicate a failure in the electronic circuitry in control interface 104 and/or sub-system that is used to measure the level of electrical current through the primary winding 105 of transformer 106.

FIG. 1B is provided as an example only to illustrate one possible implementation of control interface 104. In some implementations, checker 207 may be omitted from control circuitry 202. In such implementations, the control circuitry 202 may use only one of the signal 217 and the sensing elements 206 to detect the level of electrical current through winding 115 of transformer 116. The control circuitry 202 may include digital logic and/or any other suitable type of electronic circuitry that is configured to perform the tasks discussed above.

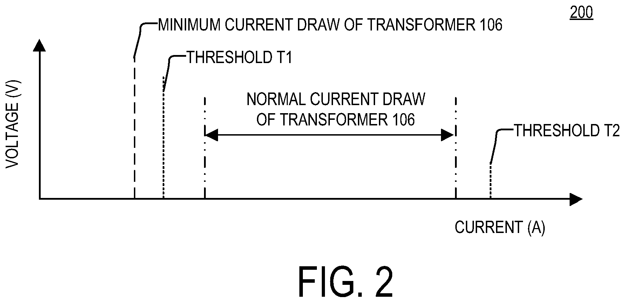

FIG. 2 is a graph 200 illustrating aspects of the operation of system 100. The Y-axis of graph 200 shows the value of the voltage that is output by transformer 106, and the X-axis of graph 200 shows the current draw of transformer 106. What is herein referred to as the "current draw of transformer 106" may encompass the current draw of load 109 and/or any other device or component of system 100 that is powered by using transformer 106. In one respect, graph 200 shows the upper and lower bounds of the normal current draw of transformer 106, as well as the minimum current draw of transformer 106. The minimum current draw of the transform 106 may occur when load 109 is turned off or otherwise not operational. The minimum current draw of transformer 106 may be attributable to the internal resistance of transformer 106 and/or the control interface 110 and/or transistor 112. The graph further shows the respective values of thresholds T1 and T2. Specifically, graph 200 shows that threshold T1 may be greater than the value of the minimum current draw transformer 106 and less than the lower bound of the normal current draw range of transformer 106. In addition, graph 200 shows that the value of threshold T2 may be greater than the upper bound of the normal current draw range of transformer 106.

FIGS. 3A-B illustrate an example of one possible implementation of a technique for communicating faults across transformer 106, between control interface 104 and control interface 110. According to the technique, on the downstream side of transformer 106, the control interface 110 periodically tests for errors, and communicates any errors that are detected by using transistor 108 to change the current draw of transformer 106. On the upstream side of transformer 106, the control interface 104 monitors the current draw of transformer 106 and determines that an error has been detected by control interface 110 when the current draw crosses a threshold.

FIG. 3A is a flowchart of an example of a process 300A, according to aspects of the disclosure. At step 302, the control interface 104 detects the level of electrical current through the primary winding 105 of transformer 106. According to the present example, the level of electrical current is detected by using the magnetic field sensing elements 206 and the sensing circuitry 203 (shown in FIG. 2). However, the present disclosure is not limited to any specific method for measuring or approximating the level of electrical current through the primary winding 105. At step 304, the control interface 104 detects whether the level has crossed a threshold. The threshold may be the same or similar to one of the thresholds T1 and T2, which are discussed above with respect to FIG. 2. In instances when the threshold is the same or similar to threshold T1, the current through the primary winding 105 is considered to have crossed the threshold when the current is less than the threshold T1. In instances when the threshold is the same or similar to the threshold T2, the current is considered to have crossed the threshold when the current is greater than the threshold T2. In other words, the meaning of the phrase "crossing a threshold" is relative to the normal current draw range of transformer 106, and to whether the threshold is greater or smaller than the normal current draw range. If the electrical current has crossed the threshold, process 300A proceeds to step 306. Otherwise, if the electrical current has not crossed the threshold, process 300A returns to step 302. At step 306, control interface 104 generates a fault signal and provides the generated fault signal to controller 102. The generated fault signal may be the same or similar to fault signal 113, which is discussed above with respect to FIG. 1.

FIG. 3B is a flowchart of an example of a process 300B, according to aspects of the disclosure. At step 312, the control interface 110 performs a test to detect whether an error is present in load 109 and/or another component of system 100 that is situated downstream from transformer 106. The present disclosure is not limited to any specific type of error being tested for and/or any specific process for testing for errors. At step 314, the control interface determines if an error has been detected (at step 312). If an error has been detected, process 300B proceeds to step 316. Otherwise, if no error is detected, process 300B returns to step 312. At step 316, the control interface 110 changes the level of electrical current that passes through the secondary winding 107 of transformer 106 so as to cause the current through the primary winding 105 to cross the threshold (used at step 304). As noted above, the threshold may be the same or similar to one of thresholds T1 and T2 (shown in FIG. 2). When the threshold is the same or similar to threshold T1, the control interface may reduce the conductance (or increase the resistance) of the electrical path between the drain and source of the transistor 108, so as to reduce the current draw of transformer 106, and cause the electrical current through primary winding 105 to fall below the threshold T1, while remaining above the minimum current draw of transformer 106 (shown in FIG. 2). When the threshold is the same or similar to threshold T2, the control interface may increase the conductance (or reduce the resistance) of the electrical path between the drain and source of the transistor 108, so as to reduce the current draw of transformer 106, and cause the electrical current through primary winding 105 to exceed the threshold T2. As can be readily appreciated, the control interface 110A may change the conductance/resistance of the path between the source and drain of transistor 108 by varying the voltage that is applied at the gate of transistor 108.

FIG. 3C is a flowchart of an example of a process 300C, according to aspects of the disclosure. Process 300C performs the same function as process 300A, but takes advantage of redundancies that might be available in control interface 104 when control interface 104 is implemented in the manner shown in FIG. 1B.

At step 322, control circuitry 202 takes a first measurement of the electrical current through the primary winding 105 of transformer 106. According to the present example, the first current measurement is taken by using the magnetic field sensing elements 206 and the sensing circuitry 203. However, the present disclosure is not limited to using any specific method for taking the first measurement.

At step 324, control circuitry 202 takes a second measurement of the electrical current through the primary winding 105. According to the present example, the second current measurement is taken by sampling the signal 217, which is output by driver circuitry 204. However, the present disclosure is not limited to using any specific method for taking the second measurement.

At step 326, control circuitry 202 determines if the first and second measurements are in agreement with each other. In some implementations, the first measurement and the second measurement may be in agreement with each other if the difference between the first measurement and the second measurement is less than 15% of the lower of the first measurement and the second measurement. However, the present disclosure is not limited to any specific method for determining whether the first measurement is in agreement with the second measurement. If the two measurements are in agreement, process 300C proceeds to step 328. Otherwise, if the two measurements are not in agreement with each other, process 300C proceeds to step 334.

At step 328, control circuitry 202 selects one of the first and second measurements.

At step 330, control circuitry 202 detects whether the selected measurement has crossed a threshold. The threshold may be the same or similar to the threshold discussed above with respect to step 304 of process 300A. The determination of whether the threshold is crossed may be made in the manner discussed above with respect to step 304 of process 300A. If the threshold is crossed, the process 300C proceeds to step 332. Otherwise, process 300C returns to step 322.

At step 332, control circuitry 202 generates a first fault signal and provides the first signal to control circuitry 202. In some implementations, the first fault signal may be the same or similar to the fault signal 113, which is discussed above with respect to FIG. 1A.

At step 334, control circuitry 202 generates a second fault signal and provides the second signal to control circuitry 202. In some implementations, the second fault signal may be the same or similar to the fault signal 114, which is discussed above with respect to FIG. 1A.

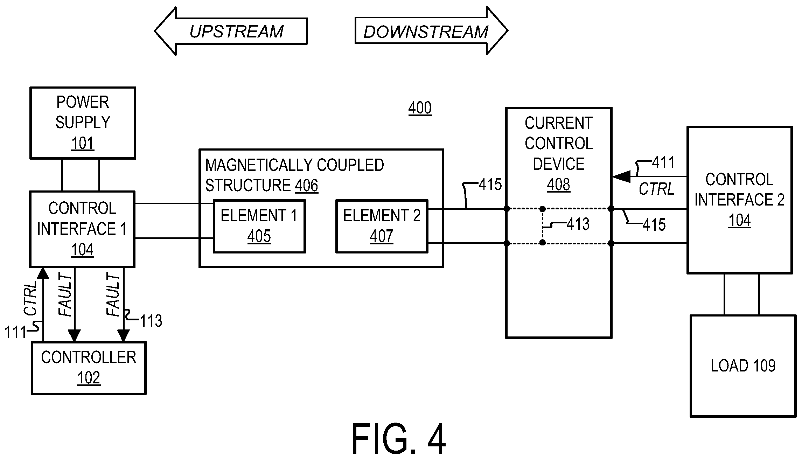

FIG. 4 is a diagram of an example of a system 400, according to aspects of the disclosure. System 400 is nearly identical to system 100 (shown in FIG. 1A), except for transformer 106 being replaced with a magnetically coupled structure 406, and transistor 108 being replaced with a current control device 408. FIG. 4 is provided to illustrate that the technique discussed above with respect to FIGS. 1A-3B can be used with any magnetically coupled structure, and not just a transformer. Furthermore, FIG. 4 is provided to illustrate that the technique discussed with respect to FIGS. 1A-3B is not limited to using a transistor to modulate the current draw of a magnetically coupled structure.

The magnetically coupled structure 406 may include one or more a transformer, an assembly that includes an inductor, and/or any other suitable type of magnetically coupled structure. As illustrated, the magnetically coupled structure 406 may include a first element 405 and a second element 407. Element 405 may include a coil and/or any other suitable type of element that is configured to receive electrical current from the control interface 104 and generate a magnetic field in response. Element 407 may include a coil, a wire, and/or any other suitable type of element that is configured to generate an electrical current in response to the magnetic field produced by element 405. As can be readily appreciated, elements 405 and 407 may be used to transfer power from the power supply 101 to load 109. The present disclosure is not limited to any specific configuration of elements 407 and 405 for as long as an increase or decrease in the electrical current through element 407 results in a commensurate (and/or proportional) increase or decrease in the electrical current through element 405.

The current control device 408 may include any component or circuit that is configured to increase or decrease the flow of electrical current through element 407. As noted above, the current control device 408 may be arranged to increase or decrease the flow of electrical current through element 407 in response to a control signal 411 that is provided to the current control device 408 by the control interface 104. In some implementations, the current control device 408 may be configured to change the resistance of a bypass path 413 in response to control signal 411. Alternatively, in some implementations, the current control device 408 may modulate the flow of current across element 407 by changing the resistance of path 415 that couples element 407 to load 109. Stated succinctly, the present disclosure is not limited to any specific method for increasing or decreasing the flow of current through element 407.

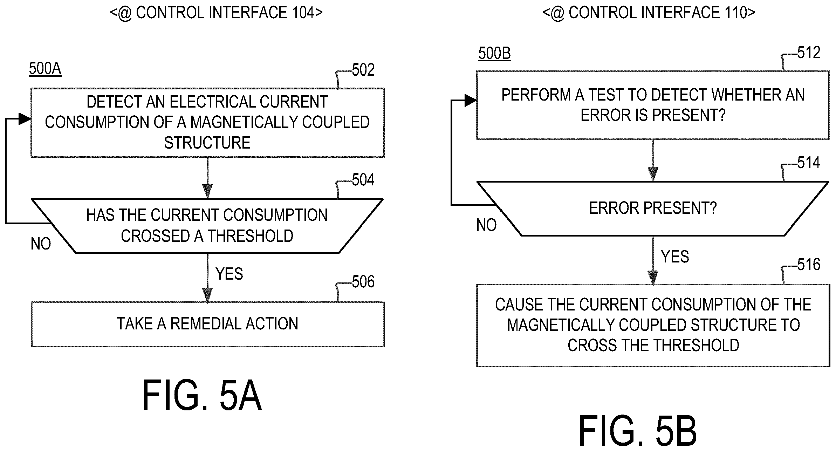

FIG. 5A is a flowchart of an example of a process 500A, according to aspects of the disclosure.

At step 502, control interface 104 detects the electrical current consumption (*e.g.*, current draw) of the magnetically coupled structure 406. In some implementations, detecting the electrical current consumption of the magnetically coupled structure 406 may include detecting the level of electrical current through element 405 of the magnetically coupled structure 406.

At step 504, control interface 104 detects if the power consumption of the magnetically coupled structure 406 has crossed a predetermined threshold. As noted above, in some implementations, the threshold may be smaller than the lower bound of the normal current draw range of the magnetically coupled structure 406 and greater than the minimum current draw of the magnetically coupled structure. In such implementations, the threshold would be considered to have been crossed when the measurement (taken at step 502) is less than the threshold. Additionally or alternatively, in some implementations, the threshold may be greater than the upper bound of the normal current draw range of the magnetically coupled structure 406. In such implementations, the threshold would be considered to have been crossed when the measurement (taken at step 502) is greater than the threshold.

In some implementations, what is herein referred to as the current draw range of the magnetically coupled structure 406 may encompass the current draw range of load 109 and/or the current draw of any circuitry or devices that are powered with an electrical current received from element 407 of the magnetically coupled structure 406. If the power consumption (detected at step 502) has crossed the threshold, process 500A proceeds to step 506. Otherwise, process 500A returns to step 502.

At step 506, control interface 104 takes a remedial action. In some implementations, taking the remedial action may include generating a fault signal and transmitting the fault signal to controller 102. The generated fault signal may be the same or similar to fault signal 113, which is discussed above with respect to FIG. 1A. Additionally or alternatively, in some implementations, taking a remedial action may include turning offload 109 and/or changing in another way how load 109 is operated.

FIG. 5B is a flowchart of an example of a process 500B, according to aspects of the disclosure. At step 512, control interface 110 performs a test to detect whether an error is present in load 109 and/or another component of system 400 that is situated downstream from magnetically coupled structure 406. The present disclosure is not limited to any specific type of error being tested for and/or any specific process for testing for errors. At step 514, the control interface determines if an error has been detected (at step 512). If an error has been detected, process 500B proceeds to step 516. Otherwise, if no error is detected, process 500B returns to step 512. At step 516, the control interface 110 causes the current consumption of the magnetically coupled structure 406 to cross the threshold (discussed with respect to step 504). In some implementations, causing the current consumption of the magnetically coupled structure to cross the threshold may include causing the current control device 408 to increase or decrease the level of electrical current through element 407 of magnetically coupled structure 406.

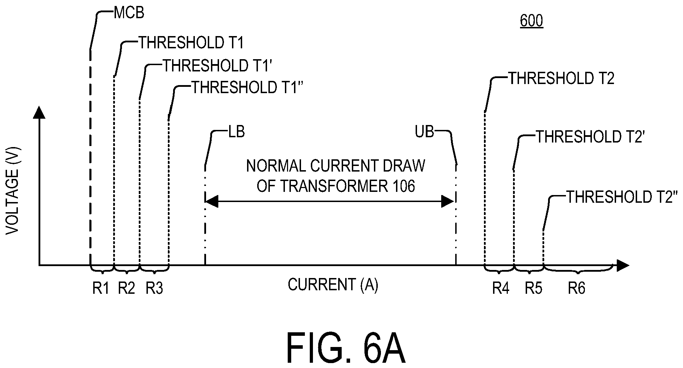

FIG. 6 is a graph 600 illustrating aspects of the operation of system 100. The Y-axis of graph 600 shows the value of the voltage that is output by transformer 106, and the X-axis of graph 600 shows the current draw of transformer 106. In one respect, graph 600 shows the lower bound LB and the upper bound UB of the normal current draw of transformer 106, as well as the minimum current draw MCB of transformer 106. The minimum current draw of the transform 106 may occur when load 109 is turned off or otherwise not operational. The minimum current draw of transformer 106 may be attributable to the internal resistance of transformer 106 and/or the control interface 110 and/or transistor 112. The graph further shows the respective values of thresholds T1, T1', T1", T2, T2', and T2", where LB>T 1 ">T 1' >T 1 >MCB and UB<T2<T2'<T2". The thresholds T1, T1', T1", T2, T2', and T2" define ranges R4-R6 as shown. Range R1 extends between the minimum current draw MCB of transformer 106 and threshold T1, range R2 extends between thresholds T 1' and T1, and range R3 extends between thresholds T 1' and T". Range R4 extends between thresholds T2 and T2', range R5 extends between thresholds T2' and T2", and range R6 includes any value greater than threshold T2". As is discussed further below, each of the threshold ranges may be mapped to a different respective error type. The mapping may be performed by using a first digital logic that is part of the control interface 104 and or a data structure that is stored in the memory of the control interface 104.

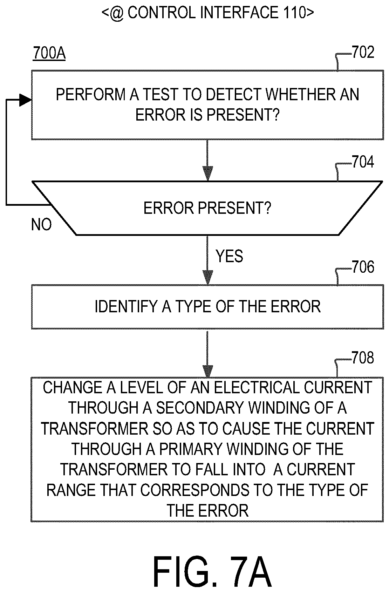

FIG. 7A is a flowchart of an example of a process 700A, according to aspects of the disclosure. According to the present example, process 700A is performed by the control interface 110. However, the present disclosure is not limited to any specific entity performing the process 700A.

At step 702, control interface 110 performs a test to detect whether an error is present in load 109 and/or another component of system 100 that is situated downstream from transformer 106. The present disclosure is not limited to any specific type of error being tested for and/or any specific process for testing for errors. In one example, performing the test may include one or more of testing whether an overvoltage condition is present, testing whether an undervoltage condition is present, and/or testing whether an excessive temperature condition is present (*e.g*., testing whether the load 109 is overheating, etc.).

At step 704, the control interface determines if an error has been detected (at step 702). If an error has been detected, process 700A proceeds to step 706. Otherwise, if no error is detected, process 700A returns to step 702.

At step 706, control interface 110 detects the type of the error (detected at step 702).

At step 708, the control interface 110 causes the current consumption of the transformer 106 to fall into the current range that is identified at step 708. In some implementations, causing the current consumption of the transformer 106 to fall into the identified range may include causing the transistor 108 to increase or decrease the level of electrical current through winding 107, so that the level of electrical current through winding 105 would fall into the identified current range. In some implementations, to execute step 708, the control interface 110 may execute a digital logic (that is part of the control interface 110) that maps each of a plurality of error types to a corresponding gate voltage, which, when applied at the gate of transistor 108, would cause the current through primary winding 105 to fall into one of threshold ranges R1-R6 that corresponds to the error type. Additionally or alternatively, the control interface 110 may access a table (that is stored in a memory of the control interface 110) that maps each of a plurality of error types to a corresponding gate voltage, which, when applied at the gate of transistor 108, would cause the current through primary winding 105 to fall into one of threshold ranges R1-R6 that corresponds to the error type.

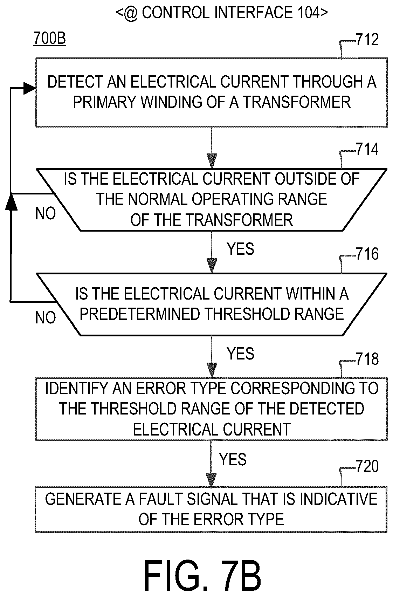

FIG. 7B is a flowchart of an example of a process 700B, according to aspects of the disclosure. According to the present example, process 700B is performed by the control interface 104. However, the present disclosure is not limited to any specific entity performing the process 700B.

At step 712, control interface 104 detects the electrical current consumption (*e.g*., current draw) of the transformer 106. Step 712 may be performed in the same manner as step 502 of process 500A.

At step 714, the control interface 104 detects if the electrical current consumption (detected at step 712) is outside of the normal operating range of transformer 106 (shown in FIG. 6). If the detected current consumption is outside of the normal operating range of transformer 106, the process 700B proceeds to step 716. Otherwise, process 700B returns to step 712.

At step 716, the control interface 104 detects if the electrical current consumption (detected at step 712) falls within any of threshold ranges R1, R2, R3, R4, R5, and R6 (shown in FIG. 6). If the electrical current consumption falls into one of the threshold ranges, the process 700B proceeds to step 718. Otherwise, process 700B returns to step 712.

At step 718, the control interface 104 detects an error type that corresponds to the threshold range in which the electrical current consumption (detected at step 712) falls. The error type may be identified by executing the digital logic or using the data structure that is discussed above with respect to FIG. 6.

At step 720, the control interface 104 generates an error signal that is indicative of the error type (identified at step 718). In some implementations, the error signal may be the same or similar to the signal 113 that is discussed above with respect to FIG. 1.

Although in the example of FIGS. 7A-B, the current across the windings of a transformer is measured and manipulated, the present disclosure is not limited thereto. In this regard, it will be understood that alternative implementations are possible in which the current through the elements of another magnetically coupled structure, such as the structure 406, is measured and manipulated in the processes of FIGS. 7A-B.

As used herein, the phrase "feature of an enable signal" may refer to either a peak in the signal or a through in the signal. As used throughout the disclosure, the term "random" may also mean "pseudorandom" if permitted by context. The term "peak/hit" as used in the context of an enable signal refers to the enable signal being set to a logic-high value. The term "trough" as used in the context of an enable signal refers to the enable signal being set to a logic-low value.

As used in this application, the word "exemplary" is used herein to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Additionally, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

To the extent directional terms are used in the specification and claims (e.g., upper, lower, parallel, perpendicular, etc.), these terms are merely intended to assist in describing and claiming the invention and are not intended to limit the claims in any way. Such terms, do not require exactness (e.g., exact perpendicularity or exact parallelism, etc.), but instead it is intended that normal tolerances and ranges apply. Similarly, unless explicitly stated otherwise, each numerical value and range should be interpreted as being approximate as if the word "about", "substantially" or "approximately" preceded the value of the value or range.

Moreover, the terms "system," "component," "module," "interface,", "model" or the like are generally intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a controller and the controller can be a component. One or more components may reside within a process and/or thread of execution and a component may be localized on one computer and/or distributed between two or more computers.

Although the subject matter described herein may be described in the context of illustrative implementations to process one or more computing application features/operations for a computing application having user-interactive components the subject matter is not limited to these particular embodiments. Rather, the techniques described herein can be applied to any suitable type of user-interactive component execution management methods, systems, platforms, and/or apparatus.

While the exemplary embodiments have been described with respect to processes of circuits, including possible implementation as a single integrated circuit, a multi-chip module, a single card, or a multi-card circuit pack, the described embodiments are not so limited. As would be apparent to one skilled in the art, various functions of circuit elements may also be implemented as processing blocks in a software program. Such software may be employed in, for example, a digital signal processor, micro-controller, or general-purpose computer.

Some embodiments might be implemented in the form of methods and apparatuses for practicing those methods. Described embodiments might also be implemented in the form of program code embodied in tangible media, such as magnetic recording media, optical recording media, solid state memory, floppy diskettes, CD-ROMs, hard drives, or any other machine-readable storage medium, wherein, when the program code is loaded into and executed by a machine, such as a computer, the machine becomes an apparatus for practicing the claimed invention. Described embodiments might also be implemented in the form of program code, for example, whether stored in a storage medium, loaded into and/or executed by a machine, or transmitted over some transmission medium or carrier, such as over electrical wiring or cabling, through fiber optics, or via electromagnetic radiation, wherein, when the program code is loaded into and executed by a machine, such as a computer, the machine becomes an apparatus for practicing the claimed invention. When implemented on a general-purpose processor, the program code segments combine with the processor to provide a unique device that operates analogously to specific logic circuits. Described embodiments might also be implemented in the form of a bitstream or other sequence of signal values electrically or optically transmitted through a medium, stored magnetic-field variations in a magnetic recording medium, etc., generated using a method and/or an apparatus of the claimed invention.

It should be understood that the steps of the exemplary methods set forth herein are not necessarily required to be performed in the order described, and the order of the steps of such methods should be understood to be merely exemplary. Likewise, additional steps may be included in such methods, and certain steps may be omitted or combined, in methods consistent with various embodiments.

Also, for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

As used herein in reference to an element and a standard, the term "compatible" means that the element communicates with other elements in a manner wholly or partially specified by the standard, and would be recognized by other elements as sufficiently capable of communicating with the other elements in the manner specified by the standard. The compatible element does not need to operate internally in a manner specified by the standard.

It will be further understood that various changes in the details, materials, and arrangements of the parts which have been described and illustrated in order to explain the nature of the claimed invention might be made by those skilled in the art without departing from the scope of the following claims.

## Claims

1. A system, comprising:
a power switch;
a controller;
a transformer having a primary winding and a secondary winding;
a first control interface that is coupled between the controller and the primary winding, the first control interface being arranged to: (i) detect an electrical current through the primary winding and (ii) output a fault signal to the controller in response to detecting that the electrical current through the primary winding has crossed a threshold; and
a second control interface that is coupled between the secondary winding and the power switch, the second control interface being configured to: (i) provide an electrical current received from the transformer to the power switch, (ii) detect whether an error is present in the operational conditions of the power switch, and (iii) in response to detecting the error, change a level of an electrical current through the secondary winding so as to cause the electrical current through the primary winding to cross the threshold.

2. The system of claim 1, wherein the power switch is coupled between the second control interface and a switching cell of a switch-mode power system, and the power switch is turned on and off based on a direction the electrical current through the secondary winding.

3. A system, comprising:
a transformer having a primary winding and a secondary winding;
a first control interface that is coupled to the primary winding of the transformer, the first control interface being arranged to: (i) detect an electrical current through the primary winding and (ii) take a remedial action in response to the electrical current through the primary winding crossing a threshold; and
a second control interface that is coupled to the secondary winding of the transformer, the second control interface being configured to: (i) detect whether an error is present in at least one of the second control interface and a device that is powered using the transformer, and (ii) in response to detecting the error, change a level of the electrical current through the secondary winding so as to cause the electrical current through the primary winding to cross the threshold.

4. The system of claim 1 or 3, wherein changing the level of the electrical current through the secondary winding includes activating a current control device that is coupled to the secondary winding in parallel with the second control interface.

5. The system of claim 1 or 3, wherein the threshold is greater than an upper bound of a normal operating range of an electrical current draw of the transformer.

6. The system of claim 1 or 3, wherein the threshold is less than a lower bound of a normal operating range of an electrical current draw of the transformer and greater than a minimum current draw of the transformer.

7. The system of claim 1 or 3, further comprising a transistor that is coupled between the transformer and the second control interface, the transistor having a source that is coupled to one end of the secondary winding and a drain that is coupled to the other end of the secondary winding, wherein changing the level of the electrical current through the secondary winding includes changing a voltage that is being applied at a gate of the transistor.

8. The system of claim 3, further comprising a power switch for controlling a switching cell of a switch-mode power supply, wherein the power switch is coupled between the second control interface and the device, wherein the power switch is turned on and off based on a direction the electrical current through the secondary winding.

9. The system of claim 1 or 3, wherein the first control interface includes:
one or more magnetic field sensing elements that are arranged to measure a magnetic field associated with a line that couples the first control interface to the primary winding of the transformer; and
a processing circuitry that is arranged to detect the electrical current through the primary winding based on a signal generated, at least in part, by the one or more magnetic field sensing elements.

10. A system, comprising:
a magnetically coupled structure including a first element that is magnetically coupled to a second element;
a first control interface that is coupled to the first element, the first control interface being arranged to: (i) detect an electrical current draw of the magnetically coupled structure and (ii) take a remedial action in response to the electrical current draw crossing a threshold; and
a second control interface that is coupled to the second element, the second control interface being configured to: (i) detect whether an error is present in at least one of the second control interface and a device that is powered using the magnetically coupled structure, and (ii) in response to detecting the error, cause the electrical current draw of the magnetically coupled structure to cross the threshold.

11. The system of claim 3 or 10, wherein taking the remedial action includes outputting a fault signal.

12. The system of claim 3 or 10, wherein taking the remedial action includes turning off the device.

13. The system of claim 10, wherein:
detecting the electrical current draw of the magnetically coupled structure includes detecting a level of an electrical current through the first element, and
changing the electrical current draw of the magnetically coupled structure includes increasing an electrical current through the second element.

14. The system of claim 10, wherein:
detecting the electrical current draw of the magnetically coupled structure includes detecting a level of an electrical current through the first element, and
changing the electrical current draw of the magnetically coupled structure includes decreasing an electrical current through the second element.

15. The system of claim 10, further comprising a current control device that is used by the second control interface to change the electrical current draw of the magnetically coupled structure.

16. The system of claim 1, 3 or 10, wherein the first control interface and the second control interface are formed on separate semiconductor dies.

17. The system of claim 10, wherein the first control interface is further arranged to:
obtain at least two redundant measurements of the current draw;
detect whether the at least two redundant measurements of the current draw are in agreement with each other; and
output a fault signal in response to detecting that the at least two redundant measurements of the current draw are not in agreement with each other.

18. The system of claim 10, wherein taking the remedial action includes outputting a fault signal on a dedicated pin.

19. A system, comprising:
a power switch;
a transformer having a primary winding and a secondary winding;
a controller;
a first control interface that is coupled between the controller and the primary winding, the first control interface being arranged to: (i) obtain a first measurement of an electrical current through the primary winding, (ii) obtain a second measurement of the electrical current through the primary winding, (iii) detect whether the first and second measurements are in agreement with each other, (iv) output a first fault signal to the controller when the first and second current measurements are not in agreement with each other, and (iv) output a second fault signal to the controller when the first current measurement and the second current measurement are in agreement with each other, but at least one of the first and second current measurements has crossed a threshold; and
a second control interface that is coupled between the secondary winding and the power switch, the second control interface being configured to: (i) provide an electrical current received from the transformer to the power switch, (ii) detect whether an error is present in the operational conditions of the power switch, and (iii) in response to detecting the error, change a level of an electrical current through the secondary winding so as to cause the electrical current through the primary winding to cross the threshold.

20. A system, comprising:
a power switch;
a controller;
a magnetically coupled structure having a first element and a second element;
a first control interface that is coupled between the controller and the first element, the first control interface being arranged to: (i) measure an electrical current through the first element, (ii) detect whether the measured electrical current falls into any given one of a plurality of predetermined threshold ranges that are outside of a normal operating range of the magnetically coupled structure, (iii) when the detected electrical current falls into any given one of the plurality of threshold ranges, identify an error type that corresponds to the given threshold range, and (iv) output a fault signal that is indicative of the error type; and
a second control interface that is coupled between the second element and the power switch, the second control interface being configured to: (i) provide an electrical current received from the magnetically coupled structure to the power switch, (ii) detect whether an error is present, and (iii) when an error is present, change a level of an electrical current through the second element so as to cause the electrical current through the first element to fall into a threshold range that corresponds to a respective type of the error.

21. The system of claim 20, wherein changing a level of an electrical current through the second element so as to cause the electrical current through the first element to fall into a threshold range that corresponds to a respective type of the error includes identifying a configuration setting for a current control device that corresponds to the respective type of the error and applying the configuration setting to a current control device that is associated with the second element.

22. The system of claim 21, wherein the current control device includes a transistor, and the configuration setting includes a gate voltage for the transistor.

23. The system of claim 10 or 20, wherein the magnetically coupled structure includes a transformer, the first element includes a primary winding of the transformer, and the second element includes a secondary winding of the transformer.
